# EUROPEAN PATENT SPECIFICATION

(11) **EP 3 407 451 B1**
(45) Date of publication and mention of the grant of the patent: **14.10.2020**
(21) Application number: 16886499.9
(22) Date of filing: 16.12.2016
(51) Int. Cl.: H02J 3/38, G05B 23/02, G05B 17/02, H02J 3/00

(54) **POWER GRID MODEL ANALYSIS DEVICE AND METHOD**
STROMNETZMODELLANALYSEVORRICHTUNG UND -VERFAHREN
DISPOSITIF ET PROCÉDÉ D'ANALYSE DE MODÈLE DE RÉSEAU ÉLECTRIQUE

(30) Priority: 19.01.2016 JP 2016007532
(43) Date of publication of application: 28.11.2018
(73) Proprietor: Hitachi, Ltd., Chiyoda-ku Tokyo 100-8280 (JP)
(72) Inventor: WATANABE Masahiro, Tokyo 100-8280 (JP); MIYAKE Noriyuki, Tokyo 100-8280 (JP); IMABAYASHI Masataka, Tokyo 100-8280 (JP); TSUJII Yuki, Tokyo 100-8280 (JP); NAKATANI Masachika, Tokyo 100-8280 (JP); KONDOU Shinichi, Tokyo 100-8280 (JP)
(74) Representative: MERH-IP Matias Erny Reichl Hoffmann Patentanwälte PartG mbB
(86) International application number: PCT/JP2016/087464
(87) International publication number: WO 2017/126260

(56) References cited:
- JP-A- H1 056 735
- JP-A- 2004 242 452
- JP-A- 2008 029 100
- JP-A- 2012 170 168
- US-A1- 2015 227 639
- RABONI PIETRO ET AL: "Reduction method for active distribution networks", 2013 IEEE GRENOBLE CONFERENCE, IEEE, 16 June 2013 (2013-06-16), pages 1-6, XP032519833, DOI: 10.1109/PTC.2013.6652198 [retrieved on 2013-11-01]
- SASCHA ALTSCHÄFFL ET AL: "A modelling approach for dynamic short-circuit analysis of the German power system considering all voltage levels", PROCEEDINGS OF THE INTERNATIONAL ETG CONGRESS 2015, 18 November 2015 (2015-11-18), pages 129-136, XP055608978, ISBN: 978-3-8007-4121-2

## Description

### Technical Field

The present invention relates to a device and a method for creating, from an analysis model of an electric power system including natural energy power generator, a model in which the system is contracted.

### Background Art

In many cases, an upper limit of electric energy of electric power transmitted by an electric power system depends on transient stability during a system fault derived from a thunderbolt or the like. In the circumstances, for determining to what degree the transmitted power can be increased, it is effective to grasp the transient stability by a transient stability simulation on the assumption of a system fault.

Recently, the wide dissemination of natural energy used in wind power generation, solar photovoltaic power generation, and the like has been ongoing. Natural energy power generator of these types is often interconnected to a system via electric power converters using power electronics; thus, a reaction during the system fault is determined, depending on a method of controlling the electric power converters. Non-Patent Document 1, for example, indicates a code for fault ride through (FRT) requirements (hereinafter, referred to as "FRT requirements"). In a case of operating natural energy power generator in accordance with this code, whether to continue operation of the natural energy power generator right after a system fault is determined, depending on a system state.

Whether to continue the operation of the natural energy power generator right after the system fault, in turn, has an influence on the transient stability of rotary type generators. Non-Patent Document 2, for example, indicates that a fault time limit varies and the transient stability differs, depending on whether to permit operation of solar photovoltaic power generation to continue right after a fault.

In this way, an electric power system transient stability simulation needs to accurately simulate operation characteristics (such as FRT characteristics) of distributed power supplies (for the natural energy power generator) using the power converters during a system fault. On the other hand, many small-scale natural energy power supplies at multiple points are often interconnected, and a problem occurs that simulation time increases if a simulation is performed to accurately simulate these power supplies. To address such a problem, a technique for achieving reduction in the simulation time by creating a "contraction model" obtained by contracting an analysis model of an electric power system and reducing the number of generators and the number of system nodes/branches has been studied.

Patent Document 1, for example, indicates a technique for determining a contraction model that can generate fluctuation waveforms at different faults with high accuracy.

Furthermore, Patent Document 2, for example, indicates a technique for dividing a contraction range of an original system model in accordance with types of designated nodes and generators, creating a partial contraction model by contracting an electric power system for each contraction range divided by system contraction means, and creating a contraction model of an entire system.

### Prior Art Documents

### Patent Documents

Patent Document 1: JP-2015-53847-A
Patent Document 2: JP-2004-242452-A
Patent Document 3: JP H10 55735 A

Patent Document 3 describes an on-line power system model that matches a current actual system of energy supplies including its own system and an external system.

### Non-Patent : Documents

Non-Patent Document 1: "Japan Electrotechnical Standards and Codes Committee, JESC E0019 Grid-interconnection Code JEAC 9701-2012 [revision 1-2013]," The Japan Electric Association, Grid Interconnection expert committee JEAC 9701-2012 (2013)
Non-Patent Document 2: "Analysis of transient stability of one-machine-to-infinite-bus system during large penetration of photovoltaics (PV)," The Institute of Electrical Engineers of Japan, IEEJ Transactions on Power and Energy, Vol. 132, No.1 (2012)
Non-Patent Document 2: "RABONI PIETRO & AL: "Reduction method for active distribution networks", 2013 IEEE GRENOBLE CONFERENCE, 2013-06-16" describes an adaptive aggregation method for subsystems with power electronic interfaced generators and voltage dependant loads.

### Summary of the Invention

### Problem to be Solved by the Invention

In a method described in Patent Document 1 mentioned above, a technique for contracting rotary type generators that may fluctuate during a system fault is indicated; however, a technique for contracting natural energy power generator is not indicated.

Furthermore, in a method described in Patent Document 2 mentioned above, a technique for creating the contraction model of the entire system is indicated; however, because of creation of a common model to system faults, there is a concern of developing calculation errors in the transient stability depending on system fault conditions.

Taking the above into consideration, an attempt to accurately analyze many interconnected small-scale natural energy power supplies at multiple points by a simulation takes a great amount of computing time. Owing to this, when a system analysis is performed by reducing computing time by contraction, it is not determined whether to permit contraction of each natural energy power supply in response to a system fault condition, resulting in low analysis accuracy of a system contraction model.

### Means for Solving the Problem

To solve the problem, systems and methods according to the independent claims are disclosed. In particular, the present invention provides an electric power system model analysis device for creating a contraction analysis model of an electric power system according to claim 1.

### Effect of the Invention

According to the present invention, it is possible to create a system contraction model in response to a system fault, and to reduce system computing time while avoiding reduction in analysis accuracy (development of stability limit errors) due to contraction.

### Brief Description of the Drawings

[Fig. 1]

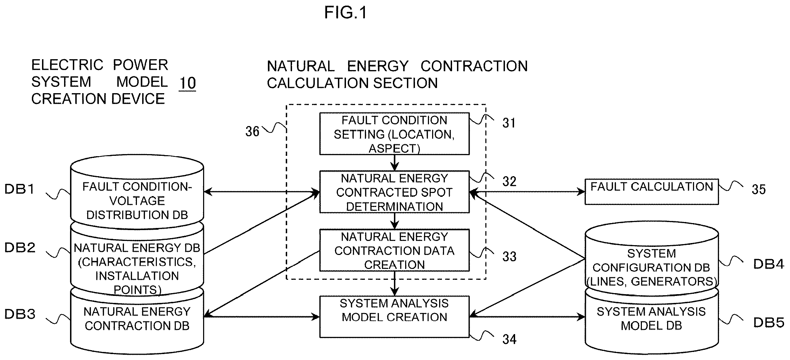

   Fig. 1 illustrates a processing function configuration of an electric power system contraction system model creation device.
[Fig. 2]

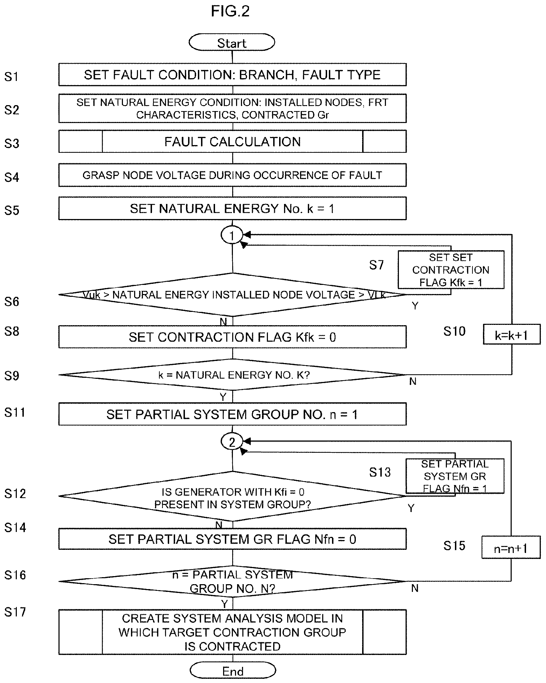

   Fig. 2 illustrates an electric power system contraction system model creation process algorithm.
[Fig. 3]

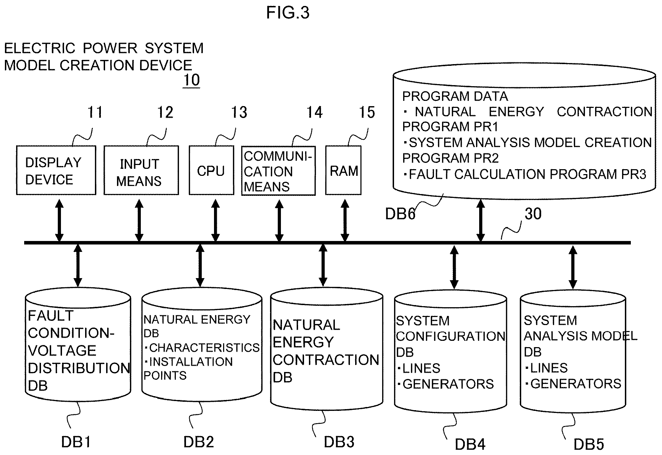

   Fig. 3 illustrates an example of a configuration of the electric power system contraction system model creation device.
[Fig. 4]

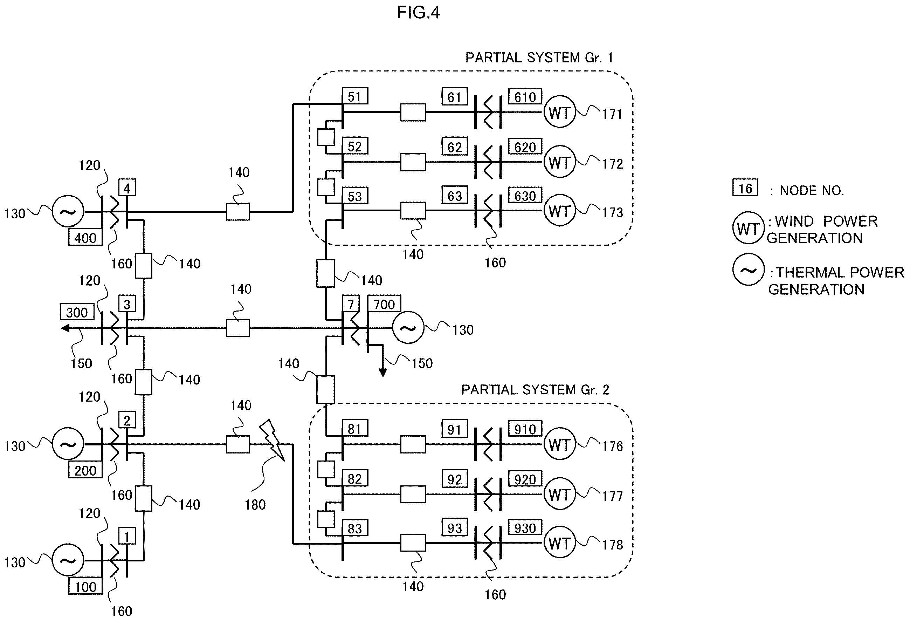

   Fig. 4 illustrates an analysis model of an electric power system including wind power generation.
[Fig. 5]

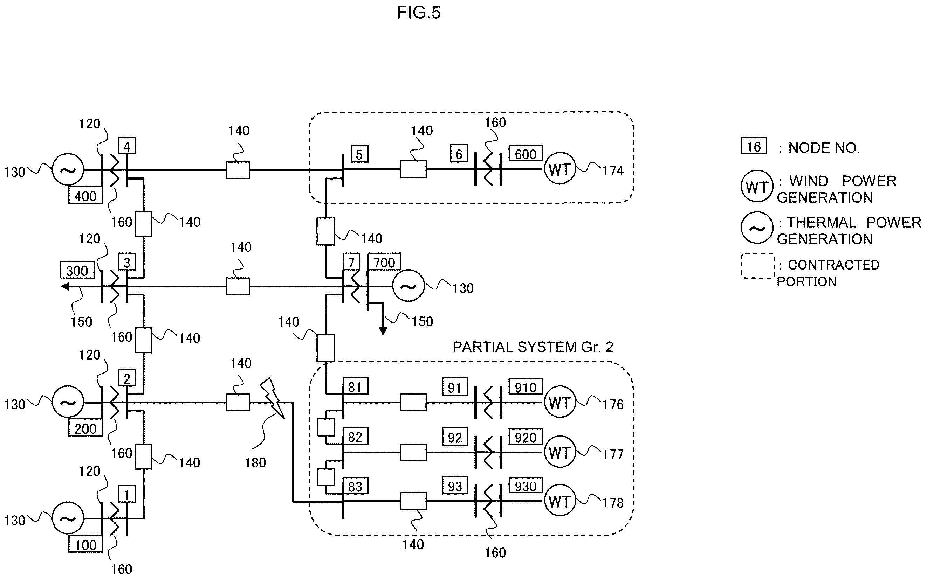

   Fig. 5 illustrates a system analysis model in which a partial system is contracted.
[Fig. 6]

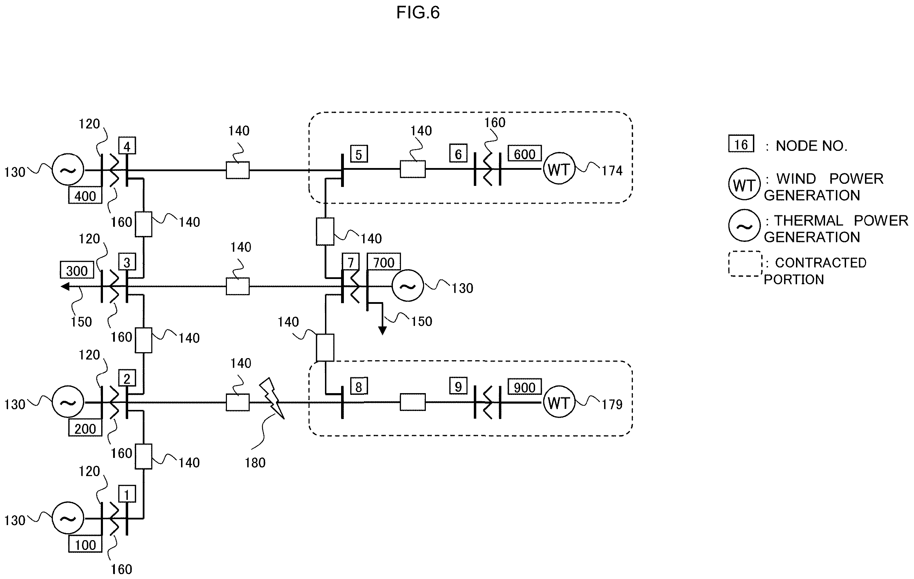

   Fig. 6 illustrates a system analysis model in which all partial systems are contracted.
[Fig. 7]

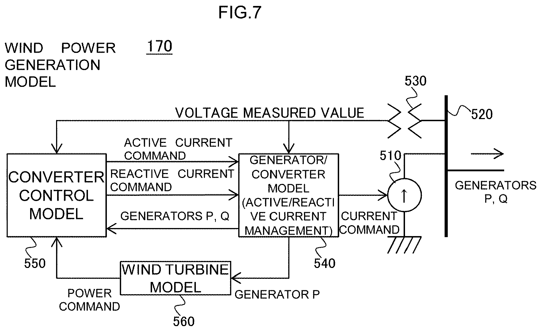

   Fig. 7 illustrates an example of a simulation of a wind power generator in the system analysis model.
[Fig. 8]

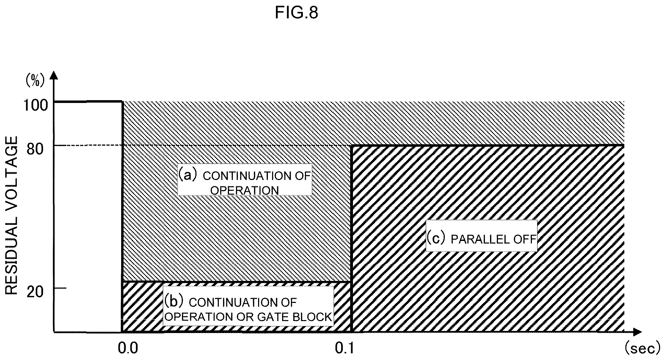

   Fig. 8 illustrates FRT characteristics of natural energy power generation (wind power generator).
[Fig. 9]

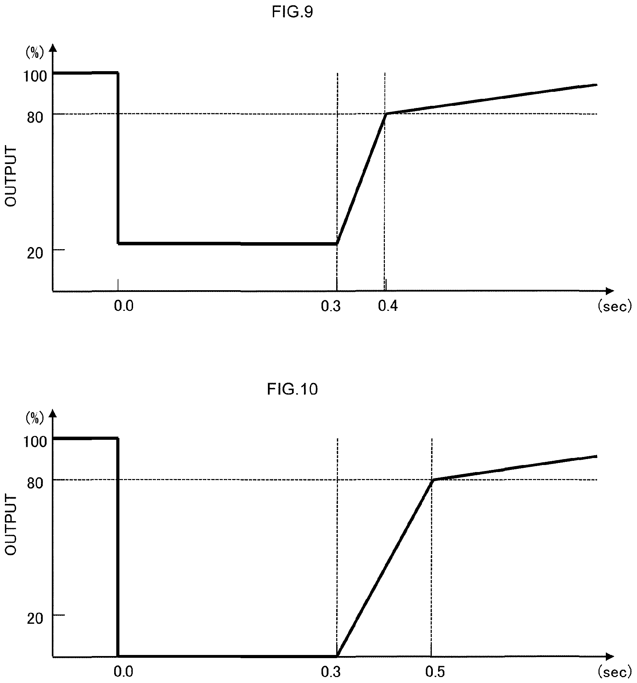

   Fig. 9 illustrates FRT characteristics of natural energy power generation (wind power generator).
[Fig. 10]
   Fig. 10 illustrates FRT characteristics of natural energy power generation (wind power generator).
[Fig. 11]

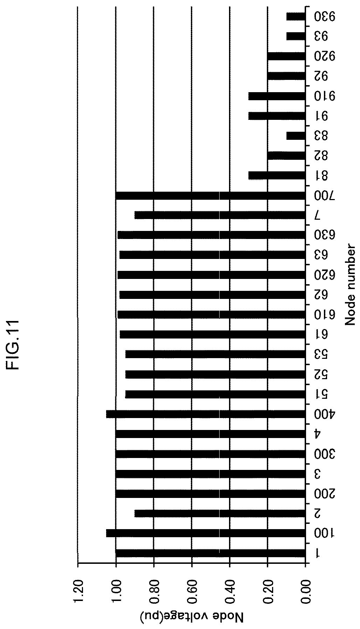

   Fig. 11 illustrates an example of a calculation of node voltages during a system fault (three-phase ground fault) in a case of occurrence of the fault.
[Fig. 12]

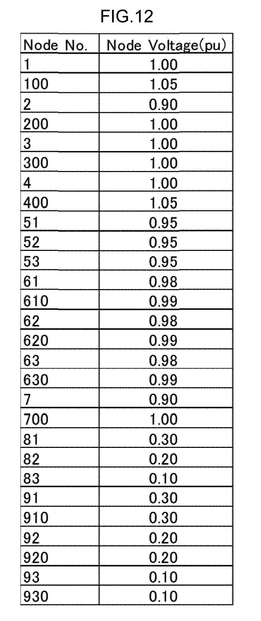

   Fig. 12 illustrates an example of the calculation of node voltages during a system fault (three-phase ground fault) in a case of occurrence of the fault.
[Fig. 13]

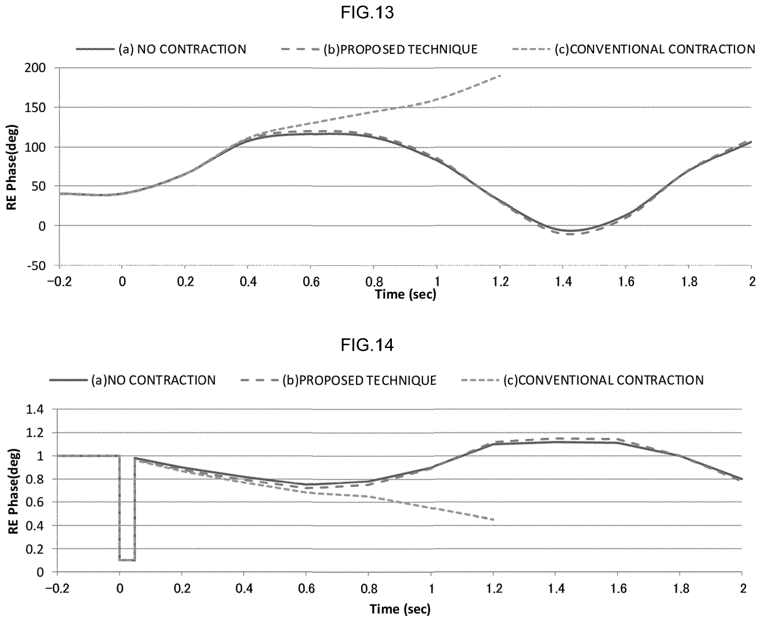

   Fig. 13 illustrates an example of a result of a simulation of an internal phase angle δ of a generator.
[Fig. 14]
   Fig. 14 illustrates an example of a result of a simulation of node voltages.

### Modes for Carrying Out the Invention

An embodiment of the present invention will be described hereinafter with reference to the drawings. It is noted that the following description is merely the embodiment and it is not intended to limit the invention itself to the following specific contents.

First, an outline of contracting an analysis model of an electric power system by contracting natural energy power supplies and reducing analysis time will be described with reference to Figs. 4, 5, and 6.

Fig. 4 illustrates an example of an analysis model of an electric power system including wind power generation 171, 172, 173, 176, 177, and 178 that is natural energy power supplies. The electric power system represented by the system analysis model of Fig. 4 is configured with nodes (buses) 120, power transmission lines 140 connecting the nodes 120, and thermal power generation 130, loads 150, transformers 160, and the like connected to the nodes 120. It is noted that numbers enclosed in boxes denote node numbers set for the sake of convenience. In addition, partial systems Gr. 1 and Gr. 2 represent partial systems including the wind power generation, and it is assumed that ranges of the partial systems Gr. 1 and Gr. 2 are set in advance by analysis personnel.

If a system fault 180 due to a thunderbolt or the like occurs in such a system analysis model, acceleration (increase in a revolution speed) and a fluctuation (vibration) of the thermal power generation 130 occur. If this acceleration of generators is equal to or higher than a certain amount or the fluctuation is dispersed, operation of the thermal power generation cannot continue, thus turning into a state in which transient stability and synchronization stability cannot be maintained. By creating the system analysis model and performing a time simulation as described herein, it is possible to determine whether the transient stability and the synchronization stability can be maintained.

It is noted herein that actions of the wind power generation 171, 172, 173, 176, 177, and 178 during a fault influence a result of a transient stability simulation of the electric power system. For example, it is important to accurately simulate performance characteristics (such as FRT characteristics) during a system fault. In the meantime, six pieces of wind power generation at six spots are interconnected, and simulation time increases as the number of the wind power generation increases. Therefore, reducing the simulation time is achieved by partially contracting the electric power system including the wind power generation.

Fig. 5 illustrates a system analysis model in which the partial system including the wind power generation 171 to 173 depicted in Fig. 4 is contracted such that the partial system includes one wind power generation 174 by the present invention to be described later. The partial system (partial system Gr. 1) including the wind power generator 171 to 173 as an object to be contracted is located apart from a point of fault. The partial system (partial system Gr. 1) is, therefore, selected as a group in which it is estimated that a change in node states (voltages, voltage phases, and the like) such as a voltage drop is small during the fault and a difference of an operating state change (whether to continue operation on the basis of the FRT characteristics) among the three pieces of wind power generation is small during or after the system fault. The partial system Gr. 2 is closer to the point of the system fault. The partial system Gr. 2 is estimated that voltage drops and voltage phase changes greatly occur during the fault and an operating state change differs among the three pieces of wind power generation, and is, therefore, excluded from a contraction target.

Fig. 6 depicts a system in which both the partial systems Gr. 1 and Gr. 2 are contracted. In this case, simulation time is reduced since the number of wind power generators is reduced to two; however, errors develop in an analysis result of the transient stability.

Fig. 3 illustrates an example of a configuration of an electric power system creation device 10 according to an embodiment of the present invention. The electric power system model creation device 10 is configured with a computing system, and a display device 11, input means 12 such as a keyboard and a mouse, a computer CPU 13, communication means 14, a random access memory RAM 15, and various databases are connected to a bus line 30. Furthermore, the electric power system model creation device 10 includes, as the databases DB of the computing system, a fault condition-voltage distribution database DB1, a natural energy database DB2, a natural energy contraction database DB3, a system configuration database DB4, a system analysis model database DB5, and a program database DB6.

The computer CPU 13 executes herein a calculation program to perform an instruction of image data to be displayed, a search of data in the various databases, and the like. The random access memory RAM 15 is a memory that temporarily stores calculation result data including fault condition-voltage distribution data, FRT characteristics of the natural energy, installation point information data, data that represents determination results of a contraction target group region and a contraction target out of the natural energy and the system, system configuration data about equipment, such as lines and generators, that configures the electric power system, system analysis model data that is a contraction result, and the like. The computer CPU 13 generates necessary image data on the basis of these pieces of data and displays the image data on the display device 11 (for example, a display screen).

Roughly six databases DB are mounted in the electric power system model creation device 10. The fault condition-voltage distribution database DB1 stores data on candidates of fault occurrence spots and fault conditions (for example, a fault aspect such as three-phase ground fault and two-phase short-circuit) assumed in a transient stability simulation. Furthermore, the fault condition-voltage distribution database DB1 stores calculation result data on amounts of change in a magnitude and a phase of a voltage of each node during each fault from those before the fault in a case of occurrence of the fault calculated by a fault calculation program. Actions (whether to permit continuation of operation) of the wind power generation 171 and the like during and after a system fault are determined from calculation result information about the voltages during the system fault.

The natural energy database DB2 stores, for example, data on installed nodes, control configurations, control parameters, and FRT characteristics (whether to permit continuation of operation, active power output patterns) of the wind power generation 171 and the like. The actions (whether to permit continuation of operation) of the wind power generation 171 and the like during and after the system fault are determined from these pieces of information as well as the calculation result information about the voltages described above.

The natural energy contraction database DB3 stores data that represents the determination results of the contraction target group region and the contraction target out of the natural energy and the system out of the natural energy and the system. For example, the natural energy contraction database DB3 stores data about the partial systems (nodes, lines, generators, and connection configurations thereof) falling within target ranges of the partial systems Gr. 1 and Gr. 2 depicted in Fig. 4.

The system configuration database DB4 stores data about equipment, such as the lines (resistances, reactances, capacitances to ground) and the generators (capacities, transient reactances, and the like), that configures the electric power system. Using this data enables flow calculation and fault computing of the electric power system, so that it is possible to grasp amounts of voltage drop during the system fault.

The system analysis model database DB5 stores the system analysis model data that is a contraction result of the electric power system calculated in accordance with an algorithm of the present invention. This data makes it possible to prepare a system analysis model to be used in the transient stability simulation with respect to each fault condition.

The program database DB6 stores a natural energy contraction program PR1, a system analysis model creation program PR2, and a fault calculation program PR3 that are calculation programs. These programs are read to the computer CPU as needed to enable execution of calculation.

A processing function configuration of the electric power system model creation device 10 according to the present invention will be described with reference to Fig. 1. The electric power system model creation device 10 is configured with functions of a fault condition setting section 31, a natural energy contracted spot determination section 32, a natural energy contraction data creation section 33, a system analysis model creation section 34, a fault calculation section 35, a natural energy contraction calculation section 36, as well as the five databases described above including the fault condition-voltage distribution database DB1, the natural energy database DB2, the natural energy contraction database DB3, the system configuration database DB4, and the system analysis model database DB5.

In Fig. 1, the natural energy contraction calculation section 36 is a processing function that executes the natural energy contraction program PR1 among the calculation programs stored in the program database DB6. The natural energy contraction calculation section 36 is configured with three processing sections including the fault condition setting section 31, the natural energy contracted spot determination section 32, and the natural energy contraction data creation section 33.

The fault condition setting section 31 is a section that sets a location and an aspect of the system fault 180. The fault condition setting section 31 may set the location and the aspect thereof by user's input or may select a system fault as appropriate from patterns prepared in advance.

The natural energy contracted spot determination section 32 creates a system analysis model from information in the natural energy database DB2 and the system configuration database DB4 and passes model data to the fault calculation section 35. The natural energy contracted spot determination section 32 also receives a fault calculation result from the fault calculation section 35, grasps voltage states (amounts of change in magnitude and phase) during the system fault, and stores the voltage states in the fault condition-voltage distribution database DB1. In addition, the natural energy contracted spot determination section 32 checks the voltage state (amounts of change in magnitude and phase) of each wind power generation connection node during the system fault with wind power generator information such as FRT characteristics stored in the natural energy database and corresponding to each wind power generation, and determines whether to permit continuation of operation and output power to be generated during and after the system fault. It is assumed that in a case in which whether to permit continuation of operation coincides within the contraction target partial system, the partial system Gr. is contracted. If the wind power generator different in whether to permit continuation of operation is present within the partial system, the partial system Gr. may be excluded from the contraction target.

The natural energy contraction data creation section 33 determines an analysis system configuration of the partial system Gr. obtained by contacting the partial system Gr. determined to be necessary to contract by the natural energy contracted spot determination section 32 and various parameters. The natural energy contraction data creation section 33 calculates the system configuration in which the partial system Gr. is contracted and the various parameters on the basis of criteria set by a user in advance. For example, the natural energy contraction data creation section 33 may calculate the system configuration on the basis of criteria, for example, that the capacity of each wind power generator is the same as the capacity thereof before contraction, a line impedance is a parallel impedance of each line before contraction, and an FRT characteristics pattern is an average value of those of the wind power generators. Moreover, the natural energy contraction data creation section 33 stores data that represents determination results of the contraction target group region and the contraction target out of the natural energy and the system in the natural energy contraction database DB3.

The system analysis model creation section 34 is a processing function that executes the system analysis model creation program PR2 among the calculation programs stored in the program database DB6. The system analysis model creation section 34 creates the system analysis model data that is the contraction result of the electric power system from the determination results of the contraction target group region and the contraction target out of the natural energy and the system calculated by the natural energy contraction data creation section 33 and the data about the equipment, such as the lines and the generators, that configures the electric power system stored in the system configuration database DB4. Furthermore, the system analysis model creation section 34 stores the system analysis model data in the system analysis model database DB5.

The fault calculation section 35 is a processing function that executes the fault calculation program PR3 among the calculation programs stored in the program database DB6. An electric power system fault calculation is an established calculation technique and can be performed using an ordinary algorithm.

A process flow that illustrates an example of an electric power system contraction system model creation process algorithm with reference to Fig. 2. In this process flow, a system fault condition is set first in process step S1.

In process step S2, a natural energy condition is set from the information in the natural energy database DB2 and the system configuration database DB4 to create the system analysis model.

In process step S3, a fault calculation is performed by the fault calculation program PR3.

In process step S4, amounts of change in magnitude and phase of the voltage of each node during the system fault from those before the fault is grasped by a fault calculation result, and the result is stored in the fault condition-voltage distribution database DB1.

In process steps S5 to S9, the voltage state (for example, magnitude) of each wind power generation connection node during the system fault is checked with the wind power generator information such as the FRT characteristics corresponding to each wind power generation and stored in the natural energy database, and it is determined whether to permit continuation of operation during and after the system fault. Specifically, as illustrated in process step S6, if the installed node of the natural energy such as the kth wind power generator falls within a certain voltage range, then a contraction flag Kfk is set to 1 (Kfk = 1) and the natural energy is determined as a contraction target.

In process steps S11 to S16, the partial system Gr. that serves as the contraction target is selected from among the partial systems Gr. determined as the contraction targets. Specifically, as illustrated in process step S12, if a generator with Kfi = 0 (generator other than the contraction targets) is present in the partial system group, then a flag Nfn of the partial system Gr is set to 1 (Nfn = 1), and the partial system group is excluded from the contraction target.

In process step S17, a system analysis model in which the target contraction group is contracted is created.

Fig. 7 illustrates an example of a simulation of a wind power generator in the system analysis model. The wind power generator model is configured as a model that controls a magnitude and a phase of a current source 510 connected to a node 520 of the electric power system. In addition, a node voltage measured value is imported into each control model via a voltage measuring device 530. A wind power generation control section is configured with a generator/converter model 540, a converter control model 550, and a wind turbine model 560. The generator/converter model 540 receives active/reactive current command values from the converter control model 550 and also receives the voltage measured value from the voltage measuring device 530, passes electric energy of active/reactive power of the generator to the converter control model 550, and passes the electric energy of active power of the generator to the wind turbine model 560. The converter control model 550 determines active/reactive current command values from the active/reactive power of the generator received from the generator/converter model, a power command received from the wind turbine model 560, and the voltage measured value received from the voltage measuring device 530, and passes the active/reactive current command values to the generator/converter model 540. The wind turbine model 560 applies an active power control command to the converter control model 550 on the basis of the active power of the generator received from the generator/converter model 540. Preparing such a wind power generation model makes it possible to simulate a change in output power of the wind power generation and whether to permit continuation of operation in the light of the voltages of the system and a converter response. The wind power generation model together with the FRT characteristics, to be described later, produces an effect that whether to permit continuation of operation during the system fault can be simulated in a manner closer to the reality.

Figs. 8, 9, and 10 are explanatory diagrams of the FRT characteristics of the natural energy generation (wind power generator). According to Non-Patent Document 1, a system that satisfies the following respects during a voltage drop is desired for the system to be interconnected after the end of March 2017 as the FRT requirements of three-phase power generation equipment for high-voltage systems.
- In a case of a voltage drop at a residual voltage equal to or higher than 20% and duration time equal to or lower than 0.3 second, the system continues operation (region (a) in Fig. 8) and the system recovers output power to 80% or more of that before the voltage drop within 0.1 second after voltage recovery. Fig. 9 illustrates an example of an output power pattern.
- In a case of a balanced voltage drop at a residual voltage equal to or lower than 20% and duration time equal to or lower than 0.3 second, the system copes with the fault by continuing operating or gate block (region (b) in Fig. 8). In this case, the system recovers the output power to 80% or more of that before the voltage drop within 1.0 second (desirably within 0.2 second) after voltage recovery. Fig. 10 illustrates an example of an output power pattern.

In this way, the case in which the voltage drop continues 0.3 second or less or the output power recovery pattern after voltage recovery vary depending on the state of the system or that of the generators. Owing to this, in a case of the natural energy power generation connected to the node having a large voltage drop, it is considered that the result closer to actual actions can be obtained by not contracting a plurality of generators but performing a calculation such that whether to permit continuation of operation of each generator can be dynamically determined in the stability simulation.

As described so far, determining the natural energy power generation to be contracted on the basis of the magnitude of each node voltage during a system fault at a certain point makes it possible to produce effects that it is possible to simulate the operation characteristics closer to the operation of the actual natural energy power generation and that the transient stability of the system can be carried out more accurately.

Effectiveness of the proposed technique will next be described with reference to schematic examples in Figs. 11, 12, 13, and 14. Figs. 11 and 12 illustrate node voltages during the system fault 180 (three-phase ground fault) when the fault occurs in the system of Fig. 4. Voltage drops are large at points closer to a fault point. It is estimated herein that any of the node voltages in the partial system Gr. 1 are higher than 20% voltage and that the wind power generation 171 to 173 can, therefore, continue operating. The partial system Gr. 1 is, therefore, determined as the contraction target. On the other hand, in the partial system Gr. 2, the node voltages of the wind power generation 176, 177, and 178 are 0.3, 0.2, and 0.1, respectively. The reason is considered as follows. While the wind power generation 176 continues to operate, it is unclear whether the wind power generation 177 and 178 can continue to operate. Whether the wind power generation 177 and 178 can continue to operate is determined depending on a transient response by control logic and settings of the individual wind power generation. It is, therefore, preferable that the partial system Gr. 2 is not selected as the contraction target and that a simulation is performed with each generator assumed as an individual model.

Fig. 13 depicts an internal phase angle δ (deg) of the generator connected to a node 700, and Fig. 14 depicts a voltage value of the node 700. Similar simulation results are obtained for an original system (a) that is not contracted and a system (b) that is the proposed technique for contracting the partial system Gr. 1, and step-out of the generator is avoided to achieve high transient stability. On the other hand, as clear from Fig. 13, in a system (c) in which both of the partial systems Gr. 1 and Gr. 2 are contracted, the generator is stepped out to cause low transient stability. In this way, appropriately selecting the natural energy power generation to be contracted makes it possible to produce the effect of obtaining a high-speed and high-accuracy simulation result.

### Industrial Applicability

The present invention can be utilized as a simulation analysis device for analyzing transient stability and synchronization stability of an electric power system in which distributed power supplies, such as natural energy power generation, including power converts are interconnected. The present invention is also utilized as a stabilization measure determination device used online (online system stabilization device). Furthermore, the present invention can be utilized as a system equipment design support system for considering buildup of system equipment to correspond to expansion of the natural energy power generation or the like.

### Description of Reference Characters

10: Electric power system model creation device
11: Display device
12: Input means such as keyboard and mouse
14: Communication means
DB1: Fault condition-voltage distribution database
DB2: Natural energy database
DB3: Natural energy contraction database
DB4: System configuration database
DB5: System analysis model database
DB6: Program database
31: Fault condition setting section
32: Natural energy contracted spot determination section
33: Natural energy contraction data creation section
34: System analysis model creation section
35: Fault calculation section
36: Natural energy contraction calculation section
120: Node
130: Thermal power generation
140: Power transmission line
150: Load
160: Transformer
171, 172, 173, 174, 176, 177, 178, 179: Natural energy power generation (wind power generation)
180: System fault
510: Current source
520: Node
530: Voltage measuring device
540: Generator/converter model
550: Converter control model
560: Wind turbine model

## Claims

1. An electric power system model analysis device (10) for creating a contraction analysis model of an electric power system, comprising:
a fault condition setting section (31) configured to set a fault condition including a location or an aspect of a fault in the electric power system; and
a natural energy contracted spot determination section (32) configured to determine whether to permit contraction of the electric power system including natural energy power supplies on the basis of the fault condition and a voltage state during the fault, **characterized in that**
the natural energy contracted spot determination section (32) is further configured to determine that the contraction is prohibited if one of the natural energy power supplies prohibited from being contracted is present within a predetermined range of at least one partial system of the electric power system, and to determine that the contraction is permitted if the natural energy power supply prohibited from being contracted is not present within the predetermined range of the electric power system, wherein
the natural energy contracted spot determination section (32) is further configured to determine whether to permit continuation of operation of the natural energy power supplies during or after the fault on the basis of the fault condition, the voltage state during the fault, and characteristics information about each of the natural energy power supplies, and to determine whether to permit the contraction on the basis of whether to permit the continuation of operation, wherein
the natural energy contracted spot determination section (32) is further configured to determine whether to permit the contraction on the basis of duration time of a voltage drop of the natural energy power supply or recovery time of voltage output during or after the fault,
wherein the electric power system model analysis device (10) further comprises
a natural energy contraction data creation section (33) configured to calculate a system configuration and predetermined parameters after the contraction for the range of a partial system within which it is determined to permit the contraction, and to create contraction data,
wherein the natural energy contraction data creation section (33) is configured to create the contraction data on the basis of preset criteria, and the criteria include a generator capacity, a line impedance, or a fault ride through characteristics pattern,
wherein the natural energy power supplies are wind turbines.

2. The electric power system model analysis device (10) according to claim 1, wherein
the fault condition setting section (31) is further configured to set the fault condition by user's input.

3. The electric power system model analysis device (10) according to claim 1, further comprising a fault calculation section (35) configured to calculate the voltage state during the fault on the basis of the fault condition.

4. The electric power system model analysis device (10) according to claim 1, wherein
the voltage state during the fault includes information about a magnitude and a phase of a voltage during the fault.

5. The electric power system model analysis device (10) according to claim 1 , further comprising a system analysis model creation section (34) configured to create an analysis model of the electric power system on the basis of the contraction data.

6. An electric power system model analysis method for creating a contraction analysis model of an electric power system, comprising:
setting a fault condition including a location or an aspect of a fault in the electric power system; and determining whether to permit contraction of the electric power system including natural energy power supplies on the basis of the fault condition and a voltage state during the fault,
**characterized in that**
it is determined that the contraction is prohibited if one of the natural energy power supplies prohibited from being contracted is present within a predetermined range of at least one partial system of the electric power system, and determined that the contraction is permitted if the natural energy power supply prohibited from being contracted is not present within the predetermined range of the electric power system, and it is determined whether to permit continuation of operation of the natural energy power supplies during or after the fault on the basis of the fault condition, the voltage state during the fault, and characteristics information about each of the natural energy power supplies, and determined whether to permit the contraction on the basis of whether to permit the continuation of operation, and it is further determined whether to permit the contraction on the basis of duration time of a voltage drop of the natural energy power supply or recovery time of voltage output during or after the fault,
wherein a natural energy contraction data creation section calculates a system configuration and predetermined parameters after the contraction for the range of a partial system within which it is determined to permit the contraction, and to create contraction data,
wherein
the natural energy contraction data creation section (33) creates the contraction data on the basis of preset criteria, and the criteria include a wind turbine generator capacity, a line impedance, or a fault ride through characteristics pattern, wherein the natural energy power supplies are wind turbines.

## Patentansprüche

1. Stromversorgungssystemmodell-Analysevorrichtung (10) zum Erstellen eines Kontraktionsanalysemodells eines Stromversorgungssystems, die Folgendes umfasst:
einen Fehlerzustandssetzabschnitt (31), der konfiguriert ist, einen Fehlerzustand, der einen Ort oder einen Aspekt eines Fehlers im Stromversorgungssystem enthält, zu setzen; und
einen Bestimmungsabschnitt (32) für Orte kontrahierter natürlicher Energie, der konfiguriert ist, auf der Grundlage des Fehlerzustands und eines Spannungszustands während des Fehlers zu bestimmen, ob ein Kontrahieren des Stromversorgungssystems, das Stromversorgungen mit natürlicher Energie enthält, erlaubt werden soll, **dadurch gekennzeichnet, dass**
der Bestimmungsabschnitt (32) für Orte kontrahierter natürlicher Energie ferner konfiguriert ist, zu bestimmen, dass das Kontrahieren verboten ist, wenn eine der Stromversorgungen mit natürlicher Energie, deren Kontrahieren verboten ist, in einem vorgegebenen Bereich mindestens eines Teilsystems des Stromversorgungssystems vorliegt, und zu bestimmen, dass das Kontrahieren erlaubt ist, wenn die Stromversorgung mit natürlicher Energie, deren Kontrahieren verboten ist, im vorgegebenen Bereich des Stromversorgungssystems nicht vorliegt, wobei
der Bestimmungsabschnitt (32) für Orte kontrahierter natürlicher Energie ferner konfiguriert ist, auf der Grundlage des Fehlerzustands, des Spannungszustands während des Fehlers und Eigenschaftsinformationen über jeder der Stromversorgungen mit natürlicher Energie zu bestimmen, ob eine Fortsetzung des Betriebs der Stromversorgungen mit natürlicher Energie während des Fehlers oder nach dem Fehler erlaubt werden soll, und auf der Grundlage davon, ob die Fortsetzung des Betriebs erlaubt werden soll, zu bestimmen, ob das Kontrahieren erlaubt werden soll,
der Bestimmungsabschnitt (32) für Orte kontrahierter natürlicher Energie ferner konfiguriert ist, auf der Grundlage der Zeitdauer eines Spannungsabfalls der Stromversorgung mit natürlicher Energie oder einer Wiederherstellungszeit der Spannungsausgabe während des Fehlers oder nach dem Fehler zu bestimmen, ob das Kontrahieren erlaubt werden soll, und
die Stromversorgungssystemmodell-Analysevorrichtung (10) ferner Folgendes umfasst:
einen Erstellungsabschnitt (33) für Kontraktionsdaten natürlicher Energie, der konfiguriert ist, eine Systemkonfiguration und vorgegebene Parameter nach dem Kontrahieren für den Bereich eines Teilsystems, in dem bestimmt wird, das Kontrahieren zu erlauben, zu berechnen und Kontraktionsdaten zu erstellen, wobei
der Erstellungsabschnitt (33) für Kontraktionsdaten natürlicher Energie konfiguriert ist, die Konzentrationsdaten auf der Grundlage voreingestellter Kriterien zu erstellen und die Kriterien eine Generatorkapazität, eine Leitungsimpedanz oder ein Kennfeld eines Durchfahrens von Fehlerzuständen umfassen, wobei
die Stromversorgungen mit natürlicher Energie Windkraftanlagen sind.

2. Stromversorgungssystemmodell-Analysevorrichtung (10) nach Anspruch 1, wobei
der Fehlerzustandssetzabschnitt (31) ferner konfiguriert ist, den Fehlerzustand durch eine Anwendereingabe zu setzen.

3. Stromversorgungssystemmodell-Analysevorrichtung (10) nach Anspruch 1, die ferner Folgendes umfasst:
einen Fehlerberechnungsabschnitt (35), der konfiguriert ist, den Spannungszustand während des Fehlers auf der Grundlage des Fehlerzustands zu berechnen.

4. Stromversorgungssystemmodell-Analysevorrichtung (10) nach Anspruch 1, wobei
der Spannungszustand während des Fehlers Informationen über einen Betrag und eine Phase einer Spannung während des Fehlers enthält.

5. Stromversorgungssystemmodell-Analysevorrichtung (10) nach Anspruch 1, die ferner Folgendes umfasst:
einen Systemanalysemodell-Erstellungsabschnitt (34), der konfiguriert ist, ein Analysemodell des Stromversorgungssystems auf der Grundlage der Kontraktionsdaten zu erstellen.

6. Stromversorgungssystemmodell-Analyseverfahren zum Erstellen eines Kontraktionsanalysemodells eines Stromversorgungssystems, das Folgendes umfasst:
Setzen eines Fehlerzustands, der einen Ort oder einen Aspekt eines Fehlers im Stromversorgungssystem enthält; und
Bestimmen, ob ein Kontrahieren des Stromversorgungssystems, das Stromversorgungen mit natürlicher Energie enthält, erlaubt werden soll, auf der Grundlage des Fehlerzustands und eines Spannungszustands während des Fehlers,
**dadurch gekennzeichnet, dass**
bestimmt wird, dass das Kontrahieren verboten ist, wenn eine der Stromversorgungen mit natürlicher Energie, deren Kontrahieren verboten ist, in einem vorgegebenen Bereich mindestens eines Teilsystems des Stromversorgungssystems vorliegt, und bestimmt wird, dass das Kontrahieren erlaubt ist, wenn die Stromversorgung mit natürlicher Energie, deren Kontrahieren verboten ist, im vorgegebenen Bereich des Stromversorgungssystems nicht vorliegt, und auf der Grundlage des Fehlerzustands, des Spannungszustands während des Fehlers und Eigenschaftsinformationen über jeder der Stromversorgungen mit natürlicher Energie bestimmt wird, ob eine Fortsetzung des Betriebs der Stromversorgungen mit natürlicher Energie während des Fehlers oder nach dem Fehler erlaubt werden soll, und auf der Grundlage davon, ob die Fortsetzung des Betriebs erlaubt werden soll, bestimmt wird, ob das Kontrahieren erlaubt werden soll, und ferner auf der Grundlage der Zeitdauer eines Spannungsabfalls der Stromversorgung mit natürlicher Energie oder einer Wiederherstellungszeit der Spannungsausgabe während des Fehlers oder nach dem Fehler bestimmt wird, ob das Kontrahieren erlaubt werden soll, wobei
ein Erstellungsabschnitt für Kontraktionsdaten natürlicher Energie eine Systemkonfiguration und vorgegebene Parameter nach dem Kontrahieren für den Bereich eines Teilsystems, in dem bestimmt wird, das Kontrahieren zu erlauben, berechnet und Kontraktionsdaten erstellt, wobei
der Erstellungsabschnitt (33) für Kontraktionsdaten natürlicher Energie die Konzentrationsdaten auf der Grundlage voreingestellter Kriterien erstellt und die Kriterien eine Windkraftanlagengeneratorkapazität, eine Leitungsimpedanz oder ein Kennfeld eines Durchfahrens von Fehlerzuständen enthalten, wobei die Stromversorgungen mit natürlicher Energie Windkraftanlagen sind.

## Revendications

1. Dispositif d'analyse de modèle de système d'énergie électrique (10) pour créer un modèle d'analyse de contraction d'un système d'énergie électrique, comprenant :
une section de définition de condition de défaut (31) configurée pour définir une condition de défaut incluant un emplacement ou un aspect d'un défaut dans le système d'énergie électrique ; et
une section de détermination de spot contracté d'énergie naturelle (32), configurée pour déterminer s'il faut autoriser la contraction du système d'énergie électrique incluant des alimentations en énergie naturelle sur la base de la condition de défaut et d'un état de tension pendant le défaut,
**caractérisé en ce que**
la section de détermination de spot contracté d'énergie naturelle (32) est en outre configurée pour déterminer que la contraction est interdite si l'une des alimentations en énergie naturelle dont la contraction est interdite est présente dans une plage prédéterminée d'au moins un système partiel du système d'énergie électrique, et pour déterminer que la contraction est autorisée si l'alimentation en énergie naturelle dont la contraction est interdite n'est pas présente dans la plage prédéterminée du système d'énergie électrique, dans lequel
la section de détermination de spot contracté d'énergie naturelle (32) est en outre configurée pour déterminer s'il faut autoriser la poursuite du fonctionnement des alimentations en énergie naturelle pendant ou après le défaut sur la base de la condition de défaut, de l'état de tension pendant le défaut et d'informations sur les caractéristiques de chacune des alimentations en énergie naturelle, et pour déterminer s'il faut autoriser la contraction sur la base de l'autorisation de la poursuite du fonctionnement, dans lequel
la section de détermination de spot contracté d'énergie naturelle (32) est en outre configurée pour déterminer s'il faut autoriser la contraction sur la base de la durée d'une chute de tension de l'alimentation en énergie naturelle ou du temps de rétablissement de la tension de sortie pendant ou après le défaut,
dans lequel le dispositif d'analyse de modèle de système d'énergie électrique (10) comprend en outre
une section de création de données de contraction d'énergie naturelle (33) configurée pour calculer une configuration de système et des paramètres prédéterminés après la contraction pour la plage d'un système partiel dans laquelle il est déterminé d'autoriser la contraction, et pour créer des données de contraction, dans lequel
la section de création de données de contraction d'énergie naturelle (33) est configurée pour créer les données de contraction sur la base de critères prédéfinis, et les critères incluent une capacité de générateur, une impédance de ligne ou un modèle de caractéristiques de continuité de service en cas de défaut (FRT),
dans lequel les alimentations en énergie naturelle sont des éoliennes.

2. Dispositif d'analyse de modèle de système d'énergie électrique (10) selon la revendication 1, dans lequel la section de définition de condition de défaut (31) est en outre configurée pour définir la condition de défaut par une entrée de l'utilisateur.

3. Dispositif d'analyse de modèle de système d'énergie électrique (10) selon la revendication 1, comprenant en outre une section de calcul de défaut (35) configurée pour calculer l'état de tension pendant le défaut sur la base de la condition de défaut.

4. Dispositif d'analyse de modèle de système d'énergie électrique (10) selon la revendication 1, dans lequel l'état de tension pendant le défaut inclut des informations sur une amplitude et une phase d'une tension pendant le défaut.

5. Dispositif d'analyse de modèle de système d'énergie électrique (10) selon la revendication 1, comprenant en outre une section de création de modèle d'analyse de système (34) configurée pour créer un modèle d'analyse du système d'énergie électrique sur la base des données de contraction.

6. Procédé d'analyse de modèle de système d'énergie électrique pour créer un modèle d'analyse de contraction d'un système d'énergie électrique, comprenant les étapes consistant à :
définir une condition de défaut incluant un emplacement ou un aspect d'un défaut dans le système d'énergie électrique ; et
déterminer s'il faut autoriser la contraction du système d'énergie électrique incluant des alimentations en énergie naturelle sur la base de la condition de défaut et d'un état de tension pendant le défaut,
**caractérisé en ce que**
il est déterminé que la contraction est interdite si l'une des alimentations en énergie naturelle dont la contraction est interdite est présente dans une plage prédéterminée d'au moins un système partiel du système d'énergie électrique, et déterminé que la contraction est autorisée si l'alimentation en énergie naturelle dont la contraction est interdite n'est pas présente dans la plage prédéterminée du système d'énergie électrique, et il est déterminé s'il faut autoriser la poursuite du fonctionnement des alimentations en énergie naturelle pendant ou après le défaut sur la base de la condition de défaut, de l'état de tension pendant le défaut et d'informations sur les caractéristiques de chacune des alimentations en énergie naturelle, et déterminé s'il faut autoriser la contraction sur la base de de l'autorisation de la poursuite du fonctionnement, et il est déterminé en outre s'il faut autoriser la contraction sur la base de la durée d'une chute de tension de l'alimentation en énergie naturelle ou du temps de rétablissement de la tension de sortie pendant ou après le défaut,
dans lequel une section de création de données de contraction d'énergie naturelle calcule une configuration de système et des paramètres prédéterminés après la contraction pour la plage d'un système partiel dans laquelle il est déterminé d'autoriser la contraction, et crée des données de contraction,
dans lequel la section de création de données de contraction d'énergie naturelle (33) crée les données de contraction sur la base de critères prédéfinis, et les critères incluent une capacité de générateur d'éolienne, une impédance de ligne, ou un modèle de caractéristiques de continuité de service en cas de défaut (FRT),
dans lequel les alimentations en énergie naturelle sont des éoliennes.
